# EUROPEAN PATENT APPLICATION

(11) **EP 2 133 835 A1**
(43) Date of publication of application: **16.12.2009**
(21) Application number: 08016290.2
(22) Date of filing: 16.09.2008
(51) Int. Cl.: G06Q 30/00

(54) **Trading system based on display of information on goods or services**

(30) Priority: 11.06.2008 JP 2008152887
(71) Applicant: Yamato Corporation, Azumino-shi Nagano (JP)
(72) Inventor: Arai, Hiroshi, Honcho Nakano-ku, Tokyo (JP)
(74) Representative: Hano, Christian

(57) **Abstract**

Disclosed is a trading system based on display of information, by which a customer may accesses to information on broad goods or services, and trade with a treating company directly or through an intermediate company, based on the information. The trading system based on display of information on a goods or services, comprising providing a display shelf or display panel having each divided area and capable of displacing the divided area in individual shops, stores, in each of the divided area, a document and/or an input recording medium for a computer according information on goods or services, and information for explaining a method for trading with treating companies of treating the goods or services, and attaching an identification display to individually identify each of the divided area, and customer may acquire the information in a section selected through the identification display, and execute the trading method explained in the information, and said object may be attained.

## Description

### BACKGROUND OF THE INVENTION

### FIELD OF THE INVENTION

The present invention relates to a trading system based on display of information on goods or services in which each information on broad goods or services and treating companies of the goods or services may be comprehended in predetermined shops, and the customer may make trade on the goods or services based on said information.

### DESCRIPTION OF THE RELATED ART

Department stores, super markets or the like display multiple goods to meet customers' demands, which requires an enormous area and equipments, and also stuffs management.

However, the department stores or super markets do not correspond to sources of goods or services.

Therefore, above-mentioned requirements of an enormous area and equipments and management of personnel do not provide efficient economical distribution of goods.

Network-system based mail-order trading systems have been developed in which information on the respective goods or services are acquired, and so communication with producer of said goods or services or treating companies of cooperating with producer are undergone, and so said goods or services are provided individually from those producer or said treating companies through an e-mail based network system.

However, any of the network-system based mail-order trading systems merely provide individual information and individual trading, and neither summarizes broad goods or services nor treats them at the selectable state.

On the other hand, a display shelf or display panel of displaying information on these goods or services is essential to summarize broad goods or services and treat them at the selectable state, as is mentioned later in the description of the basic construction of the present invention.

However, the prior arts do not disclose or suggest a display shelf or display panel displaying such information.

While Patent Document 1 (Japanese Patent Application Laid-Open No. 2005-34358) discloses the construction of a display shelf, the construction is directed to a display shelf or display panel for individual goods, and information on broad goods or services is not displayed.

On the other hands, Patent Document 2 (Japanese Patent Application Laid-Open No. 2008-15737) discloses a construction relating to a program for designing a shelf of goods in an electronic goods trading system, the shelf of goods to be designed by the program is merely a shelf of goods at an individual business party. Patent Document 2 does not disclose the construction of a display shelf that displays information on goods or services treated by a plurality of companies.

### DISCLOSURE OF THE INVENTION

Accordingly, it is an object of the present invention to provide a construction relating to a trading system based on display of information on goods or services, in which customer may come in contact with information on broad goods or services, and may trade with a treating company directly or through an intermediate company, based on the information, and the network of communication sales without enormous area and equipment of a department store or super market.

To achieve the object, the basic construction of the present invention is comprised of a trading system based on display of information on goods or services, providing a display shelf or display panel with each divided area and capable of displaying the divided area in individual shops; storing, in each of the divided area, a document, and/or an input recording medium for a terminal computer in an e-mail based network communication, recording information on goods or services, and information for explaining a method for trading with treating companies which treat the goods or services, and attaching an identification display to individually identify each of the divided area; and a customer may acquire the information in a section selected through the identification display, and execute the trading method explained in the information to receive the goods or services from each of the treating companies or a group company thereof directly or through the shops.

### BRIEF DESCRIPTION OF THE DRAWINGS

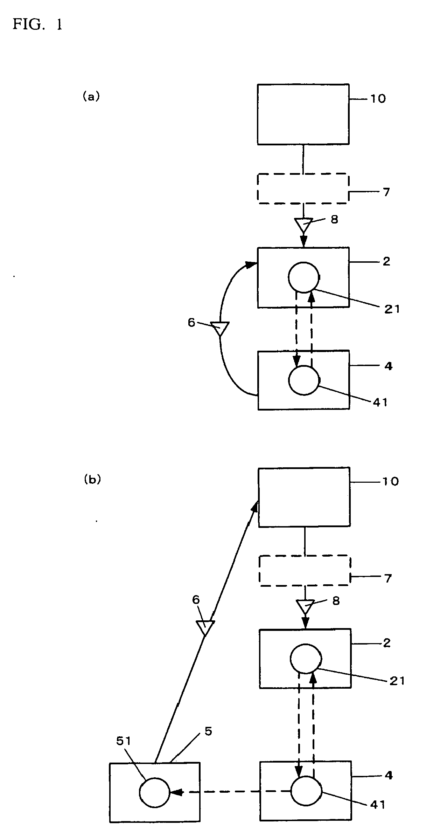

Figs. 1A and 1B are block diagrams showing the construction of a first embodiment, in which Fig. 1A shows a case wherein a treating company directly provides a customer with a goods or a material necessary for receiving service, while Fig. 1B shows a case where a group company of a treating company provides a shop equipping a display shelf or display panel provided therein with a material of a goods or service;

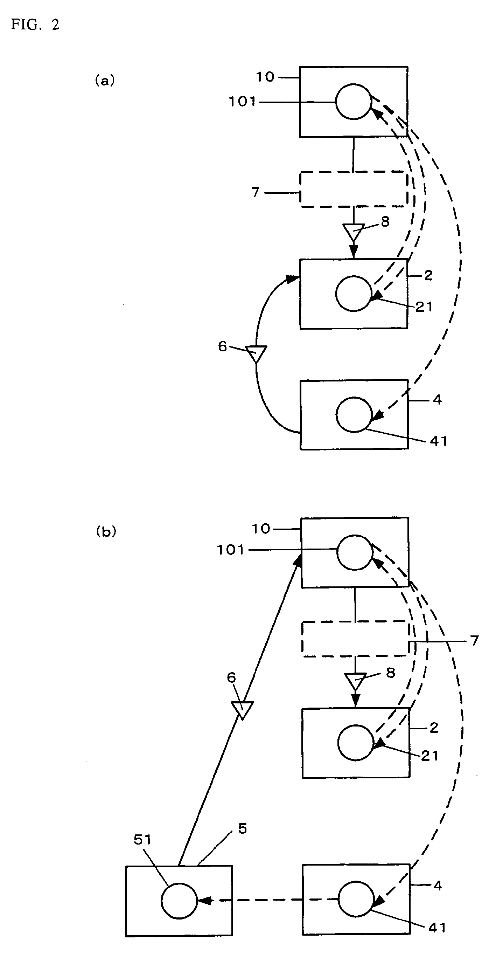

Figs. 2A and 2B are block diagrams showing the construction of a second embodiment, in which Fig. 2A shows a case wherein a treating company directly provides a customer with a goods or a material necessary for receiving service, while Fig. 2B shows a case wherein a group company of a treating company provides a shop equipping a display shelf or display panel provided therein with a goods or a material of service;

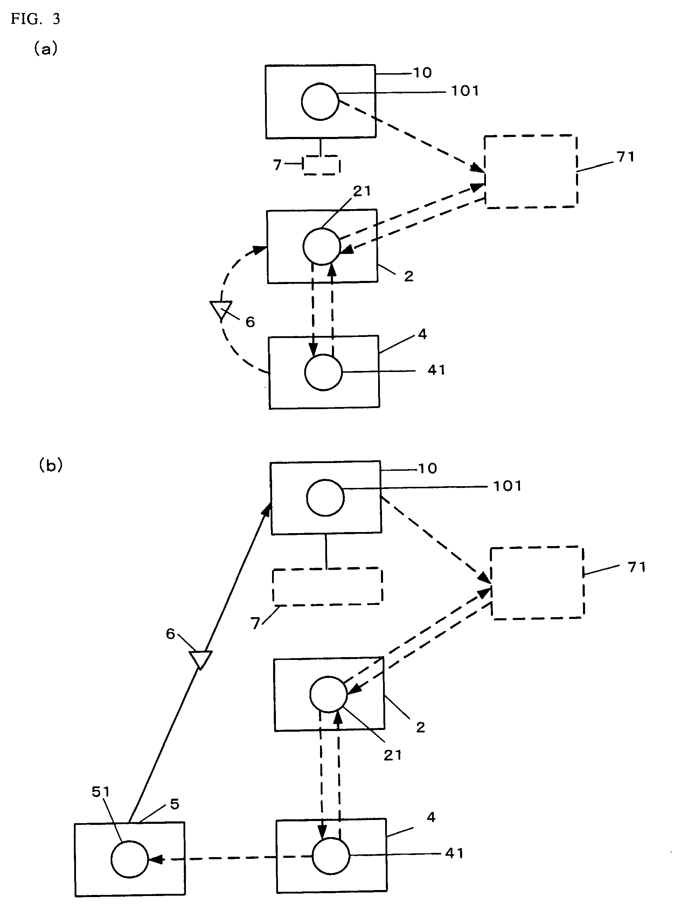

Figs. 3A and 3B are block diagrams showing the construction of a third embodiment, in which Fig. 3A shows a case where a treating company directly provides a customer with a goods or a material necessary for receiving service, while Fig. 3B shows a case wherein a group company of a treating company provides a shop equipping a display shelf or display panel provided therein with a goods or a material necessary for receiving service;

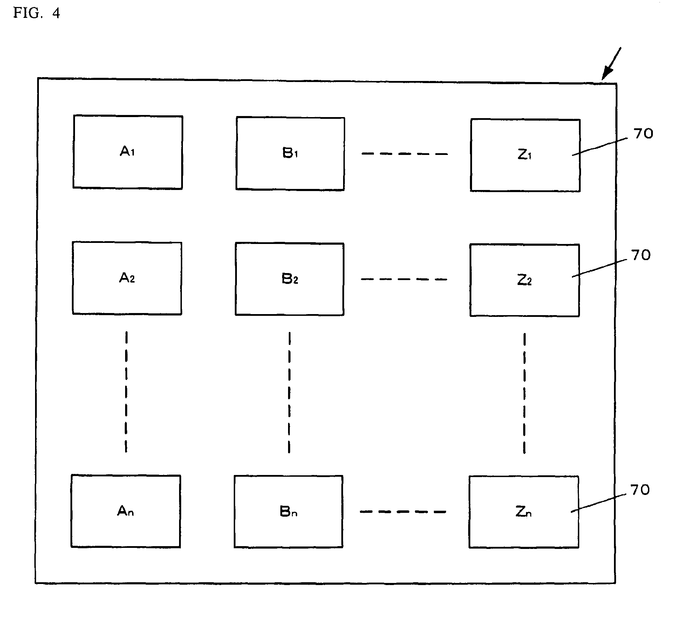

Fig. 4 is a plan view showing display states in each divided area of a display shelf or display panel according to the present invention;

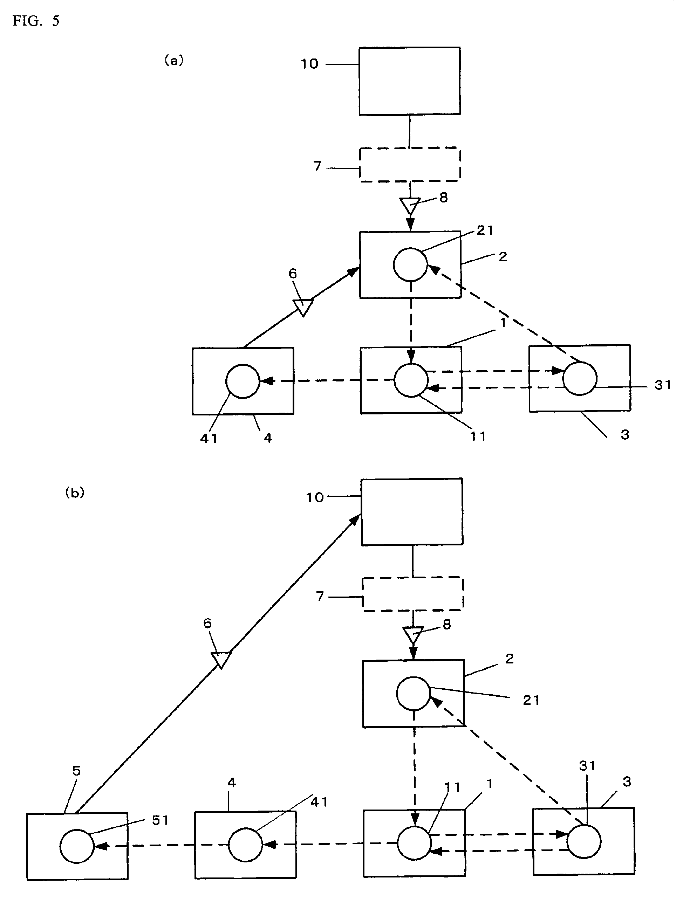

Figs. 5A and 5B are block diagrams showing an embodiment in which a main office controls the respective shops, in which Fig. 5A shows a case wherein a treating company directly provides a customer with a goods or a material necessary for receiving service, while Fig. 5B shows a case wherein a group company of a treating company provides a shop equipping a display shelf or display panel provided therein with a goods or a material necessary for receiving service;

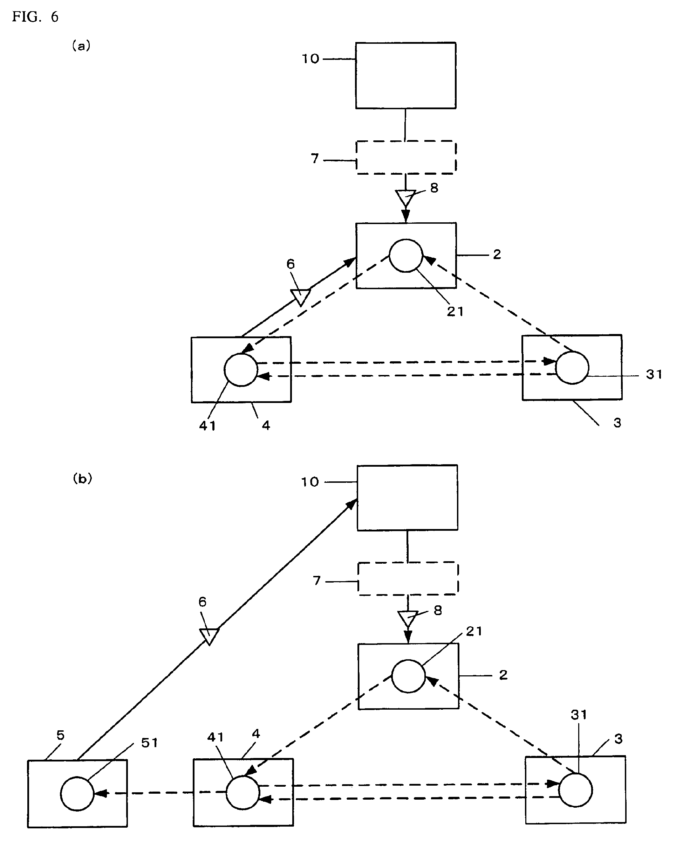

Figs. 6A and 6B are block diagrams showing an embodiment in which each treating company is associated with a financial institution and cash-card based sales are possible, in which Fig. 6A shows a case wherein a treating company directly provides a customer with a goods or a material necessary for receiving service, while Fig. 6B shows a case wherein a group company of a treating company provides a shop equipping a display shelf or display panel provided therein with a goods or a material necessary for receiving service;

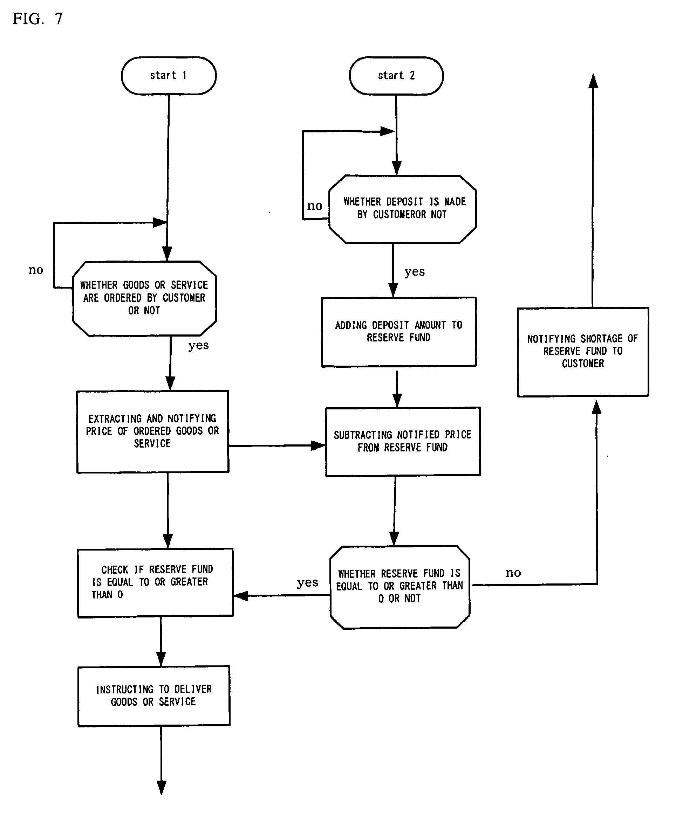

Fig. 7 is a flowchart illustrating a state wherein a computer calculating on the process from receiving an order for a goods or service by a customer until providing a goods or a service to a customer cooperates with a computer of a financial institution of settlement calculating the state of reserve fund a customer; and

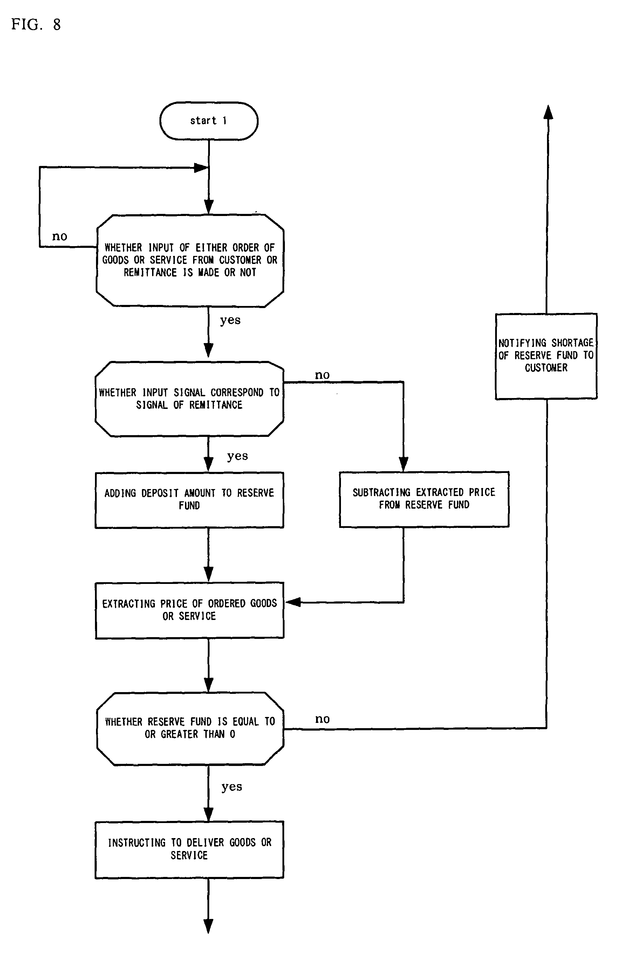

Fig. 8 is a flowchart illustrating a state wherein one computer calculates on the process from receiving an order for a goods or service by a customer until providing a goods or service to a customer and calculates the state of reserve fund of a customer.

### Description of Reference Numerals

- 1: main office
- 10: shop
- 11: computer set up in main office
- 101: computer set up in shop
- 2: customer
- 21: terminal computer set up by customer
- 3: settlement financial institution
- 31: computer set up in financial institution of settlement
- 4: treating company
- 41: computer set up by treating company
- 5: group company of treating company
- 51: computer set up by the group company
- 6: material of goods or service
- 7: display shelf or display panel
- 70: divided areas of the display shelf or display panel
- 71: home page indicating display in divided areas of the display shelf or display panel
- 8: document or input memory stored, i.e., input recording medium for terminal computer

### BEST MODE FOR CARRYING OUT THE INVENTION

Fig. 4 shows several view of a display shelf or display panel 7 according to the present invention, in which identification display is adapted in each divided area 70 in the display shelf or display panel 7 (A₁, ... Aₙ, B₁, ...Bₙ, ..., Z₁, ...Zₙ in Fig. 4 designate the respective identification displays).

The basic function of the identification display is to identify that trading contents differ until each other in each divided area.

Concrete examples of the identification display include names of goods or services, names of the treating companies 4, locations to produce goods or services, a celebrating event or an event for buying and presenting a goods or service, and a combination thereof. In any case, a function of inducing a trading may be provided additionally (However such an inducing function is not essential factor in identification display.)

To explain concretely, the names of the goods or services are not limited to concrete or individual names, and a name of a general concept, such as "alcoholic beverage" or "travel service", may be used. Moreover, display with a commercial advertisement element, such as "recommending wine selection" or "famous box lunches at railroad stations all over Japan" is possible.

In the case of displaying the name of a treating company, the name united with the designation of a goods or service, and further with a commercial advertisement.

Regarding a location for producing goods or services, a display based on a general concept, such as "exhibition of Hokkaido products", is also possible, and, in such a case, a display may be apparently accompanied also with a commercial advertisement element, such as "special selection of traditional Kyoto products".

Regarding with a display promoting purchase of a goods or service as a present for an event, it is possible to use a display which does not specify a goods or service, such as a display "presents for fathers" relating with the Father's Day, a display "gift selection for Mother's Day" relating with the Mother's Day, and a display "selection for midyear gifts" for a midyear gift.

Also with regard to a display promoting purchase of a goods or service for a ceremonial event, it is possible to use a display which does not specify a goods or service, such as a display "best collection for weddings" and "collection needed for funerals".

As is above described, there are various identification displays, and they are not particularly limited.

A customer 2 may select a divided area which may treat a goods or service to purchase based on an identification display, and acquire a document 8, such as a pamphlet or catalog, stored in the divided area, and/or an input recording medium 8 or input memory 8, such as CD-ROM, for a terminal computer 21 in a e-mail based network system (hereinafter indicated simply as "input memory 8").

In above mentioned accruing document 8 or input memory 8, the method of either priceless or requiring a certain price may be adapted.

To make it easier for a customer 2 to identify displays of each of the divided area 70 of the display shelf or display panel 7, the displays at adjoining divided areas should preferably be made with different colors.

The front cover of a catalog or pamphlet which is a typical example of the document 8 often provides displays to identify trading contents, accompanied with a function of inducing purchase.

Taking attention to such as above mentioned stete, the specific form which is characterized by using a catalog or pamphlet as the document 8 stored, and using the front cover of the catalog or pamphlet as an identification display is quite effective in that display of goods or services and storage of information thereon are both used.

The customer 2 may make an order for a selected goods or service to a treating company 4 directly or through a shop 10 by the information-based trading method based on described items of the document 8, such as a pamphlet or catalog, and/or on items shown in a picture output from the terminal computer 21 based on the input memory 8, and purchase the goods or service directly or through the shop 10.

While the trading method typically involves an order based on communication by ordinary mail, telephone, facsimile, e-mail or the like, and acceptance of the order by a treating company 4, the trading method is not especially limited, and may employ, for example, either a cash-card based trading or a network-system based trading.

Block diagrams of Figs. 5A and 5B and a flowchart of Fig. 7 illustrate an embodiment **characterized in that** a customer 2 notifies an identification code thereof and a goods or service relating to an order to a main office 1 which controls each of the shops 10, by the trading method described in the acquired information, the main office 1 may instruct a treating company 4 to deliver a material 6 necessary for receiving service specified by the notification to the customer 2 or the shop 10, and a computer 31 set up in financial institution of settlement 3 corresponding to the main office 1 records a reserve fund of each customer 2, adding a deposit amount from the customer 2 to the reserve fund, subtracting the price of the goods or service relating to the order notified by the main office 1 from the reserve fund, to inform the main office 1 of whether payment of the goods or service is possible or not, according to a reserve fund state of the customer 2. Particularly, Figs. 5A and 5B and Fig. 7 show the embodiment in which, based on a goods or service relating to an order from a customer 2, a computer 11 set up in the main office 1 informs the financial institution of settlement 3 on the price of the goods or service, while the computer 31 set up in the settlement financial institution of settlement 3 informs the computer 11 of the main office 1 on whether payment of the goods or service is possible or not.

The block diagrams of Figs. 5A and 5B show the state of distribution of the document 8 and/or an input memory 8 from the display shelf or display panel 7 and the goods or the materials 6 necessary for receiving service (indicated by solid-line arrows), and the state of transfer status of information through a computer (indicated by dotted arrows). Fig. 5A shows a case wherein the treating company 4 directly provides the customer 2 with the goods or the material 6 necessary for receiving service (e.g., the material 6 being a ticket for a specific event, a text needed to teach a specific technique, or the like), and Fig. 5B shows a case where a group company 5 of the treating company 4 provides the shop 10 with a material 6 necessary for receiving a service.

This specific form is excellent in view of business administration in that the main office 1 which controls each of the shops 10 equipping the display shelf or display panel 7 provided therein may uniformly control the order from customers 2 and delivery of materials 6 necessary for receiving services.

In this specific form, normally, the computer 11 is set up in the main office 1, receives an order made by an operation of the terminal computer 21 of the customer 2, and cooperates with the computer 31 of the financial institution of settlement 3.

On the other hand, the flowchart of Fig. 7 illustrates a typical example of the state of cooperation of both computers 11, and 31.

That is, through calculation procedures starting from "start 1", the main office 1 instructs delivery of the goods or the material 6 of service, after the process of notification to the computer 31 of the financial institute of settlement 3 regarding existence or nonexistence of purchase order for a goods or a service and, the price of the goods or service relating to the order, and the receipt of notification from the cooperating computer 31 of the financial institution of settlement regarding whether the price of the goods or service relating to the order falls within the range of the reserve fund or not.

According to calculation procedures starting from "start 2", and upon determination on whether or not a deposit has been made or not, the computer 31 of the settlement financial institution of settlement 3 may comprehend the reserve fund status in the account of each customer 2 based on the aforementioned addition and subtraction; may notify the computer 11 of the main office 1 of the result of determination whether the price of the ordered goods or service falls within the range of the reserve fund or not; and, if the price does not fall within the range of the reserve fund, may notify the customer 2 of such a state on reserve funds (such a notification is indicated by the dotted arrows directed upward to the terminal computer 21 in the block diagrams of Figs. 5A and 5B.).

Block diagrams of Figs. 6A and 6B and the flowchart of Fig. 7 illustrate an embodiment **characterized in that** a trading of using a cash card is possible trading method according to the description in document 8 and/or input memory 8; the customer 2 notifies an identification code of his own cash card and a goods or service relating to an order to the treating company 4; the treating company 4 may deliver the goods 6 or the material 6 necessary for receiving service specified by the notification directly or through the group company 5; and the computer 31 set up by the financial institution of settlement 3 corresponding to the treating company 4 may record a reserve fund corresponding to a cash card, owned by each customer 2 and capable of making a deposit to the financial institution of settlement 3 and ensuring a trading with the treating company 4, with adding a deposit amount from the customer 2 to the reserve fund, and subtracting the price of the goods or service relating to the order notified by the treating company 4 from the reserve fund, and may inform the treating company 4 on whether payment of the goods or service is possible or not according to the reserve fund state of the customer 2. Particularly, Figs. 6A and 6B and Fig. 7 show the specific form in which, based on the notification of a goods or service relating to an order from the customer 2, the computer 41 set up in the treating company 4 informs the financial institution of settlement 3 on the price of the goods or service, while the computer 31 of the financial institution of settlement 3 informs the computer 41 of the treating company 4 on whether payment of the goods or service is possible or not.

The block diagrams of Figs. 6A and 6B show the state of distribution of the document 8 and/or an input memory 8 from the display shelf or display panel 7 (indicated by solid-line arrows) and the goods or the materials 6 necessary for receiving service, and transfer status of information through the computer (indicated by dotted arrows : Fig. 6A shows a case wherein the treating company 4 directly provides the customer 2 with the goods or material 6 necessary for receiving the goods 6 or service, and Fig. 6B shows a case wherein the group company 5 of the treating company 4 provides the shop 10 with the goods or the material 6 necessary for receiving the goods 6 or service.).

In this specific form, the respective shops 10 may promote their own businesses independently, while the customer 2 may directly make a cash-card based order and purchase with the treating company 4 described in information corresponding to each divided area, thus achieving simple trading.

In this specific form, normally, the computer 41 set up in company 4 receives an order made by an operation of the terminal computer 21 of the customer 2, and cooperates with the computer 31 of the financial institution of settlement 3.

On the other hand, the flowchart of Fig. 7 illustrates a typical example of the cooperation of both computers 31, and 41.

That is, through calculation procedures starting from "start 1", each treating company 4 instructs delivery of the goods or the material 6 of service, after the process of notification to the computer 31 of the financial institute of settlement 3 regarding existence or nonexistence of purchase order for a goods or a service and, the price of the goods or service relating to the order, and the receipt of notification from the cooperating computer 31 of the financial institution of settlement regarding whether the price of the goods or service relating to the order falls within the range of the reserve fund or not. According to calculation procedures starting from "start 2", and upon determination on whether a deposit from the customer 2 is made or not, the financial institution of settlement 3 may comprehend the reserve fund state in the account of each customer 2 based on the aforementioned addition and subtraction; may notify the computer 41 of the treating company 4 of the result of determination whether the price of the ordered goods or service falls within the range of the reserve fund or not; and, if the price does not fall within the range of the reserve fund or not, may notify the customer 2of such a state on reserve funds (Such a notification is indicated by the dotted arrows directed upward to the terminal computer 21 in the block diagrams of Figs. 6A and 6B.).

Especially, in the specific form shown in the block diagrams of Figs. 6A and 6B, when a cash-card based trading with a plurality of treating companies 4 is possible and the financial institution of settlement 3 which processes deposit and payment based on the cash-card of each customer 2 is common to the plurality of treating companies 4, the plurality of treating companies 4 may share information on the reserve fund of each customer 2 through the financial institution of settlement 3.

### Embodiments

Embodiments would be described as follows;

### (First Embodiment)

As shown in block diagrams of Figs. 1A and 1B and a flowchart of Fig. 8, a first embodiment is **characterized in that** a customer 2 may trade by ordering a goods or service to a treating company 4, and a computer 41 set up in the treating company 4 may record a reserve fund of each customer 2 and add a deposit amount from the customer 2 to the reserve fund, while subtracting the price of the goods or service relating to the order notified by the main office 1 from the reserve fund, and the treating company 4 can determine whether a trading is possible or not according to the reserve fund status of the customer 2.

The diagrams of Figs. 1A and 1B show the state of distribution of the document 8 and/or an input memory 8 from the display shelf or display panel 7 and the goods or the materials 6 necessary for receiving service (indicated by solid-line arrows), and the state of transfer information through a computer (indicated by dotted arrows; Fig. 1A shows a case wherein the treating company 4 directly provides the customer 2 with the goods 6 or the material 6 necessary for receiving service, and Fig. 1B shows a case wherein the group company 5 of the treating company 4 provides the shop 10 equipping display shelf or display panel with the goods or the material 6 necessary for receiving service.).

In the present embodiment 1 is different from the specific form shown in the block diagrams of Figs. 5A and 5B or the specific form shown in the block diagrams of Figs. 6A and 6B, in that the determination on the state of the reserve fund of a customer 2 is not always obtained by the cooperating computer 31 of the settlement financial institution of settlement 3.

In consideration of such search a state, the first embodiment may carry out a safe trading such that the computer 41 set up by the treating company 4 comprehend the reserve fund state of individual customer 2, and instructs delivery of a goods or service when the reserve fund of the customer 2 is equal to or larger than the price of the goods or service relating to the order, as shown in the block diagrams of Figs. 1A and 1B and the flowchart of Fig. 8.

On the other hand, the flowchart of Fig. 8 illustrates a typical example of the case wherein one computer 41 set up in the treating company 4 processes a trading in the first embodiment.

That is, according to calculation procedures starting from "start", after determining on whether a customer 2 has made an order for a goods or service or not, and whether the customer 2 has made a deposit or not, the computer 41 may instruct delivery of the goods or service when the reserve fund of the customer 2 is equal to or larger than the aforementioned price; and, if the price does not fall within the range of the reserve fund, may notify the customer 2 the state of reserve fund, through the process of comprehending the state of the reserve fund of the customer 2 based on the aforementioned addition and subtraction (Such a notification is indicated by the dotted arrows directed upward to a terminal computer 21 in the block diagrams of Figs. 1A and 1B.).

### (Second Embodiment)

A second embodiment is **characterized in that** as the recorded trading method, an order through a shop 10 is possible, in other words, a customer 2 may trade with the order of a goods or service to the shop 10 and shop 10 may trade with said order to a treating company 4.

Block diagrams of Figs. 2A and 2B show the sate of distribution of the document 8 and/or an input memory 8 from the display shelf or display panel 7 and the goods or the materials 6 necessary for receiving service (indicated by solid-line arrows), and transfer information through a computer (indicated by dotted arrows) in the construction **characterized in that** a computer 101 set up in the shop 10 may record a reserve fund of each customer 2, adding a deposit amount from the customer 2 to the reserve fund, and subtracting the price of the goods or service relating to the order from the reserve fund, and may inform the treating company 4 on whether payment of the goods or service is possible or not according to the reserve fund status of the customer 2 (Fig. 2A shows a case wherein the treating company 4 directly provides the customer 2 with the goods or the material 6 necessary for receiving service, and Fig. 2B shows a case where a group company 5 of the treating company 4 provides the shop 10 equipping the display shelf or display panel 7 provided therein with the goods or the material 6 for receiving service.).

It is not always convenient for the customer 2 to carry out a trading involving making an order for a goods or service to the treating company 4 directly or through an intermediate trader (e.g., main office 1 in the embodiment shown in the block diagrams of Figs. 5A and 5B), but it may be rather convenient to carry out a trading by consulting with the shop 10 equipping the display shelf or display panel 7 provided therein. The second embodiment is compatible with such convenience of the customer 2.

On the other hand, the flowchart of Fig. 8 illustrates a typical example of the case wherein one computer 101 set up in the shop 10 disposes the order from the customer 2 and comprehends the reserve fund status of the customer 2 in the second embodiment.

That is, according to calculation procedures starting from "start", after the determination on whether the customer 2 has made an order for a goods or service or not, and whether the customer 2 has made a deposit or not, the computer 101 may instruct the computer 41 of the treating company 4 to delivery the goods or service when the reserve fund of the customer 2 is equal to or larger than the aforementioned price; and, if the price does not fall within the range of the reserve fund, may notify the customer 2 the state of reserve fund, through the process of comprehending the state of the reserve fund status of the customer 2 based on the aforementioned addition and subtraction (Such a notification is indicated by the dotted arrows directed upward to a terminal computer 21 in the block diagrams of Figs. 2A and 2B.).

### (Third Embodiment)

As shown in block diagrams of Figs. 3A and 3B, a third embodiment is **characterized in that** a home page 71 having a unique address in an e-mail based network system is set through a computer 101 set up in a shop 10, and a display for each of divided areas 70 of a display shelf or display panel 7 is displayed as an image on the home page 71.

The block diagrams of Figs. 3A and 3B show a case wherein, based on a goods or service corresponding to a picture displayed on the home page 71 and the method for trading with a treating company 4 which treats the goods or service, a customer 2 may trade through his own terminal computer 21 and a computer 41 of the treating company 4 as in the case of the first embodiment, and shows the state of distribution of the document 8 and/or an input memory 8 from the display shelf or display panel 7 and the goods or the materials 6 necessary for receiving service, and transfer status of information through a computer (The state of ordering a goods or service and the distribution status of the goods or the material 6 necessary for receiving service are based on a trading mode similar to the case of the first embodiment, in which Fig. 3A shows a case wherein the treating company 4 directly provides the customer 2 with the goods 6 or the material 6 necessary for receiving service, and Fig. 3B shows a case where a group company 5 of the treating company 4 provides the shop 10 equipping the display shelf or display panel 7 with the goods or the material 6 necessary for receiving service.).

In the third embodiment, the customer 2 may naturally access the displays corresponding to the each divided area 70 through the home page 71 without visiting to the shop 10 equipping the display shelf or display panel 7 provided therein.

Especially, with the use of an embodiment wherein the home page 71 records goods or services corresponding to displayed pictures as well as information on a method for trading with the treating companies 4 of treating the goods or service, and a customer 2 may acquire the information through a terminal computer 21 , the customer 2 may comprehend information stored in each divided area 70 and carry out a trading without visiting to the shop 10 equipping the display shelf or display panel 7 provided therein at all, making it more convenient.

Thus, in third embodiment, a customer 2 may make the full use of his own terminal computer 21 to select and purchase the goods or service.

### Advantageous effect of the Invention

According to the foregoing basic construction of this invention, a customer may get hold of information on a goods or service stored in each divided area selected through identification display and information on a treating company which treats the goods or service, and may be provided with a desired goods or service from the treating company directly or through the shop based on the trading method described in the information.

In addition, when the treating company corresponds to supplier of goods or services, it is possible to directly obtain inexpensive goods or services.

The present invention is a goods purchase system, or, in a sense, an information department store, which may be adapted in any of an individual store, a franchise, and a group distributor having a main office and branches, and may be utilized for a customer 2 to select and purchase a goods or service.

## Claims

1. A trading system based on display of information on goods or services, providing a display shelf or display panel with each divided area and capable of displaying the divided area in individual shops; storing, in each of the divided area, a document, and/or an input recording medium for a terminal computer in an e-mail based network communication, recording information on goods or services, and information for explaining a method for trading with treating companies which treat the goods or services, and attaching an identification display to individually identify each of the divided area; and a customer may obtain the information I n a section selected through the identification display, and execute the trading method explained in the information to receive the goods or services from each of the treating companies or a group company thereof directly or through the shops.

2. The trading system according to claim 1, wherein the input recording medium is a CD-ROM.

3. The trading system according to claim 1 or 2, wherein the identification displays uses an expression to induce a trading.

4. The trading system according to any one of claims 1 to 3, wherein a catalog or pamphlet is used as the stored document, and a front cover of the catalog or pamphlet is used as the identification display.

5. The trading system according to any one of claims 1 to 4, wherein a customer notifies an identification code thereof and a goods or service relating to an order to a main office which controls each of the shops, by the trading method recorded in the acquired information, the main office may instruct a treating company to deliver a goods or a material necessary for receiving service specified by the notification to the customer or the shop, and a computer set up in a financial institution of settlement corresponding to the main office may record a reserve fund of each customer, adding a deposit amount from the customer to the reserve fund, may subtracting a price of the goods or service relating to the order notified by the main office from the reserve fund, and may inform the main office of whether payment of the goods or service is possible or not according to a reserve fund state of the customer.

6. The trading system according to claim 5, wherein based on a goods or service relating to an order from a customer, a computer set up in the main office informs the financial institution of settlement on a price of the goods or service, while the computer of the financial institution of settlement informs the computer of the main office on whether payment of the goods or service is possible or not.

7. The trading system according to any one of claims 1 to 4, wherein a trading of using a cash card is possible as trading method explained in our document and/or input recording medium, a customer notifies an identification code of a his own cash card and a goods or a service relating to an order to a treating company, the treating company may deliver a material necessary for receiving a goods or a service specified by the notification itself or through a group company, and a computer set up in a financial institution of settlement corresponding to the treating company may record a reserve fund corresponding to a cash card owned by each customer and capable of making a deposit to the financial institution of settlement and ensuring a trading with the treating company, adding a deposit amount from the customer to the reserve fund, and subtracting a price of the goods or service relating to the order notified by the treating company from the reserve fund, and may inform the treating company of whether payment of the goods or service is possible or not according to a reserve fund state of the customer.

8. The trading system according to claim 7, wherein based on notification of a goods or service relating to an order from a customer, a computer set up in the treating company informs the financial institution of settlement on a price of the goods or service, while the computer of the financial institution of settlement informs the computer of the treating company on whether payment of the goods or service is possible or not.

9. The trading system according to any one of claims 1 to 4, wherein a customer may trade with the order of a goods or service to a treating company, and a computer set up in the treating company is provided with a memory for recording a reserve fund of each customer, adding a deposit amount from the customer to the reserve fund, and subtracting a price of the goods or service relating to the order notified by the main office from the reserve fund, so that the treating company may determine whether trading of the goods or service is possible or not according to a reserve fund state of the customer.

10. The trading system according to any one of claims 1 to 4, wherein as is described as trading method in our document and/or are input recording medium, an order through a shop equipping a display shelf or display panel provided therein is possible, and a customer may trade with the order of a goods or service to the shop and the shop may transmit said order to a treating company.

11. The trading system according to claim 10, wherein a computer set up in a shop may record a reserve fund of each customer, adding a deposit amount from the customer to the reserve fund, and subtracting a price of the goods or service relating to the order from the reserve fund, and may inform the treating company of whether payment of the goods or service is possible or not according to a reserve fund status of the customer.

12. The trading system according to any one of claims 1 to 11, wherein a home page equipping a unique address in an e-mail based network system is set through a terminal computer set up in a shop, and a display for each of the divided area of the display shelf or display panel is displayed as a picture on the home page.

13. The trading system according to claim 12, wherein the home page describes goods or services corresponding to displayed images as well as information on a method for trading with treating companies of treating the goods or service, and a customer may acquire the information through a his own terminal computer.
